(19) Europäisches Patentamt
European Patent Office
Office européen des brevets

(11) **EP 2 178 170 B1**

(12) **EUROPEAN PATENT SPECIFICATION**

(45) Date of publication and mention
of the grant of the patent:
**01.10.2014 Bulletin 2014/40**

(51) Int Cl.:
***H01Q 21/24*** *(2006.01)*    ***H04B 7/08*** *(2006.01)*
***H04L 1/02*** *(2006.01)*

(21) Application number: **09172540.8**

(22) Date of filing: **08.10.2009**

(54) **Diversity antenna system and electronic apparatus using the same**

Diversitätsantennensystem und elektronische Vorrichtung damit

Système de plusieurs antennes et appareil électronique l'utilisant

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **15.10.2008 JP 2008265984**

(43) Date of publication of application:
**21.04.2010 Bulletin 2010/16**

(73) Proprietor: **Panasonic Corporation
Kadoma-shi
Osaka 571-8501 (JP)**

(72) Inventors:
• **Sako, Motohiko
Osaka-shi Osaka 540-6207 (JP)**
• **Fukushima, Susumu
Osaka-shi Osaka 540-6207 (JP)**

(74) Representative: **Grünecker, Kinkeldey,
Stockmair & Schwanhäusser
Leopoldstrasse 4
80802 München (DE)**

(56) References cited:
**EP-A1- 1 445 822     EP-A1- 2 251 978
EP-A2- 1 480 367     WO-A1-2007/105796
GB-A- 2 401 994     US-A- 5 757 333**

**Description**

The present invention relates to a diversity antenna system that uses maximum ratio combining or equal gain combining and that can be used in wireless communication apparatuses.

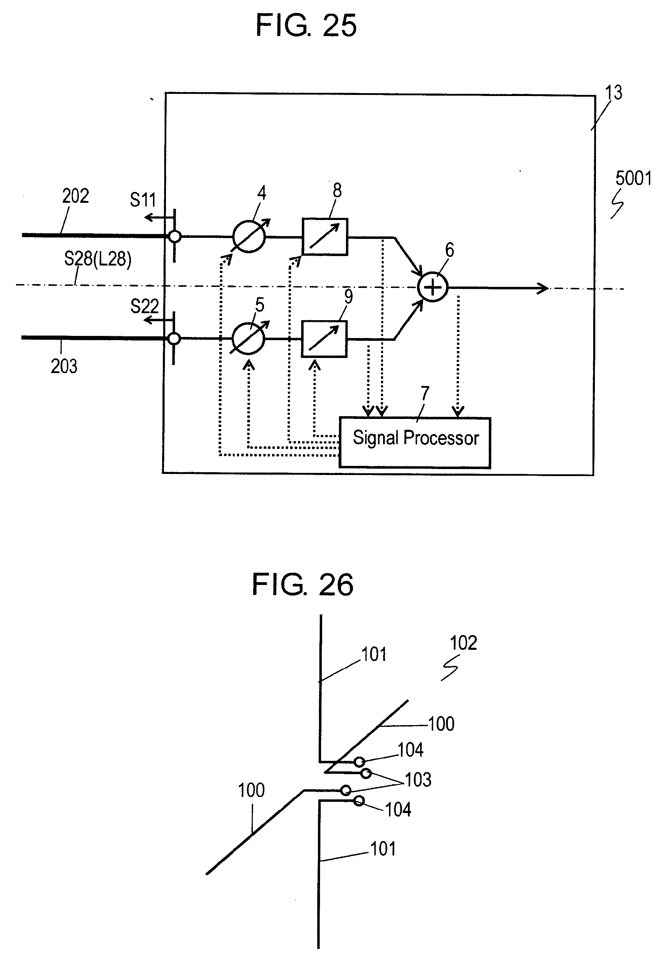

Fig. 26 is a schematic view of antenna element 102 of a conventional diversity antenna system using equal gain combining disclosed in Japanese Patent Laid-Open Publication No.2007-166188. Antenna element 102 is a cross dipole antenna including first dipole antenna 100 and second dipole antenna 101 crossing orthogonally to each other. Dipole antennas 100 and 101 include feeding sections 103 and 104, respectively. Dipole antennas 100 and 101 have polarizations orthogonal to each other, and hence, have a low correlation coefficient between the antennas, thus providing the diversity antenna system with preferable reception characteristics.

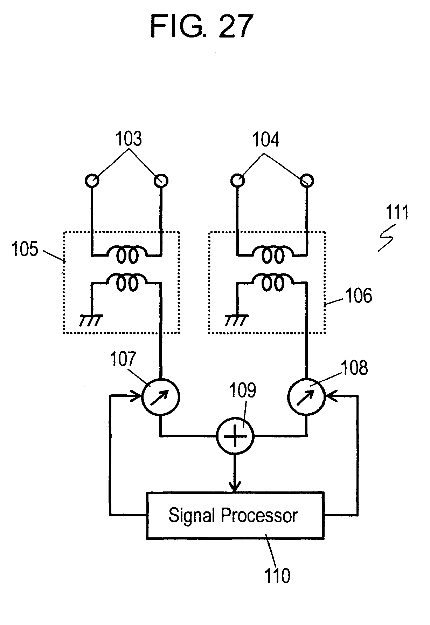

Fig. 27 is a block diagram of circuit section 111 of the conventional diversity antenna system. Feeding sections 103 of first dipole antenna 100 and feeding sections 104 of second dipole antenna 101 shown in Fig. 26 are connected to first balun 105 and second balun 106, respectively, so as to perform balance-unbalance conversion.

First and second baluns 105 and 106 output signals to first and second variable phase shifters 107 and 108, respectively. First and second variable phase shifters 107 and 108 output signals with shifted phases. Combiner 109 adds up the signals with the shifted phases.

Combiner 109 outputs a signal to signal processor 110 which demodulates the signal and determine a signal quality value, such as a carrier-to-noise ratio or a bit error rate (BER), indicating a quality of the signal. Signal processor 110 controls phase shift amounts of first and second variable phase shifters 107 and 108 so as to cause the signal quality value to indicate the best quality.

The cross dipole antenna of antenna element 102 has a large size and has an intricate structure. In order to reduce the size and to simplify the structure, antenna element 102 may be composed of two monopole antennas mounted onto a ground plate with circuit section 111 shown in Fig. 27 thereon, instead of the cross dipole antenna, thereby performing diversity reception with equal gain combining using these monopole antennas. In this case, however, the polarizations of the two monopole antennas cannot be orthogonally to each other, and prevents the antennas from having a small correlation coefficient between the antennas, hence providing the diversity antenna system with inferior reception characteristics.

A receiving diversity apparatus for a mobile station in an HDR mobile communication system is known from EP 1480367 (A2). This apparatus measures C/I values of pilot channels on respective antennas, measures a C/I value of in-phase combined pilot channel, and then selectively performs one of a selection diversity receiving operation and an in-phase combining receiving operation according to the measured C/I values. An optimal diversity receiving status is then maintained according to changes of a presently received pilot channel, and the optimal diversity receiving operation between the selection diversity receiving operation and the in-phase combining diversity receiving operation is selected at a starting point of the pilot channel.

Reference GB 2401994 (A) discloses an antenna device comprising a dielectric substrate with first and second opposed surfaces. A conductive ground plane is formed on a first area of the second surface of the substrate, leaving a second area of the second surface blank. At least two conductive feedlines are formed on the first surface of the substrate and extend from an area corresponding to the first area of the second surface to an area corresponding to the second area of the second surface. Each feedline is provided with a dielectric element in the area corresponding to the second area of the second surface, and at least one slot or discontinuity is formed in the conductive ground plane at an interface between the first and second areas in a region between the feedlines.

It is the object of the present invention to provide a diversity antenna system with superior reception characteristics.

This is achieved by the features of the independent claims. Preferred embodiments are subject matter of the dependent claims.

BRIEF DESCRIPTION OF THE DRAWINGS

Fig. 1 is a block diagram of a diversity antenna system according to exemplary Embodiment 1 of the present invention.
Fig. 2 is a block diagram of the diversity antenna system according to Embodiment 1.
Fig. 3 is a block diagram of the diversity antenna system according to Embodiment 1.
Fig. 4 is a block diagram of the diversity antenna system according to Embodiment 1.
Fig. 5 is a block diagram of the diversity antenna system according to Embodiment 1.
Fig. 6 is a circuit block diagram of the diversity antenna system according to Embodiment 1.
Fig. 7 is a circuit block diagram of the diversity antenna system shown in Fig. 6.
Fig. 8 is a circuit block diagram of the diversity antenna system shown in Fig. 6.

Fig. 9 is a circuit block diagram of the diversity antenna system shown in Fig. 6.

Fig. 10 is a circuit block diagram of the diversity antenna system shown in Fig. 6.

Fig. 11 is a circuit block diagram of the diversity antenna system shown in Fig. 6.

Fig. 12 is a circuit block diagram of another diversity antenna system according to the first embodiment.

Fig. 13 is a circuit block diagram of the diversity antenna system shown in Fig. 12.

Fig. 14 is a circuit block diagram of still another diversity antenna system according to Embodiment 1.

Fig. 15 is a block diagram of a diversity antenna system according to Exemplary Embodiment 2 of the invention.

Fig. 16 is a block diagram of the diversity antenna system according to Embodiment 2.

Fig. 17 is a block diagram of the diversity antenna system according to Embodiment 2.

Fig. 18 is a block diagram of the diversity antenna system according to Embodiment 2.

Fig. 19 is a block diagram of the diversity antenna system according to Embodiment 2.

Fig. 20 is a block diagram of the diversity antenna system according to Embodiment 2.

Fig. 21 is a block diagram of the diversity antenna system according to Embodiment 2.

Fig. 22 is a block diagram of the diversity antenna system according to Embodiment 2.

Fig. 23 is a block diagram of another diversity antenna system according to Embodiment 2.

Fig. 24 is a block diagram of still another diversity antenna system according to Embodiment 2.

Fig. 25 is a block diagram of a comparative example of a diversity antenna system.

Fig. 26 is a schematic view of antenna elements of a conventional diversity antenna system.

Fig. 27 is a block diagram of the conventional diversity antenna system.

## DETAILED DESCRIPTION OF PREFERRED EMBODIMENTS EXEMPLARY EMBODIMENT 1

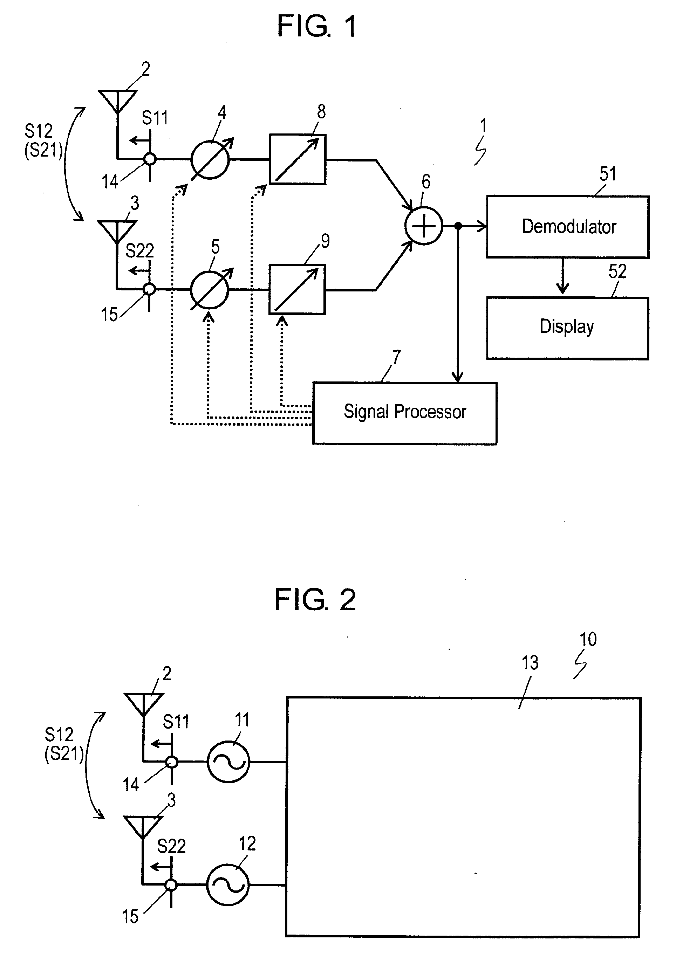

Fig. 1 is a block diagram of diversity antenna system 1 according to Exemplary Embodiment 1 of the present invention. Diversity antenna system 1 includes antenna elements 2 and 3, variable phase shifters 4 and 5, combiner 6, and signal processor 7. Variable phase shifters 4 and 5 phase-shifts signals output from antenna elements 2 and 3, respectively. Combiner 6 adds up signals output from variable phase shifters 4 and 5, and outputs a signal provided by adding up the signals. Signal processor 7 receives the signal from combiner 6, and determine a signal quality value indicating a quality of the received signal, thereby controlling, based on the signal quality value, the phase amounts shifted in variable phase shifters 4 and 5.

The polarizations of antenna elements 2 and 3 form a predetermined angle θ between them, wherein the angle θ is neither 0 nor 90 degrees. The polarization of antenna element 2 is obtained when antenna element 2 is connected to a load resistance and antenna element 3 is not fed. The polarization of antenna element 3 is obtained when antenna element 3 is connected to a load resistance and antenna element 2 is not fed.

In the case that antenna elements 2 and 3 are monopole antennas operating with a ground plate, the polarizations of antenna elements 2 and 3 are the polarizations of antenna elements 2 and 3 operating with the ground plate.

In the case that the polarization of at least one of antenna elements 2 and 3 is an elliptical polarization or a circular polarization, the direction of the polarization direction changes with time, and hence, the angle θ is not continuously maintained to be 0 or 90 degrees. Thus, angle θ is neither 0 nor 90 degrees.

The polarization of antenna elements 2 and 3 can cross each other. If the polarizations do not cross each other, the angle θ indicates an angle formed between the polarizations of antenna elements 2 and 3 which are seen from a normal line orthogonal to a plane parallel to both the polarizations of antenna element 2 and 3.

If the angle θ is 0 degrees, the polarizations of antenna elements 2 and 3 placed close to each other are aligned in the same direction, and causing antenna elements 2 and 3 to receive substantially the same signal, hence not providing diversity effects.

An operation of diversity antenna system 1 will be described below with reference to Fig. 1.

A signal received by antenna element 2 is input to variable phase shifter 4. Variable phase shifter 4 shifts the phase of the received signal by a predetermined phase shift amount, and outputs the signal with the shifted phase to variable amplifier 8. Variable amplifier 8 amplifies the amplitude of the received signal at a predetermined gain, and outputs the amplified signal to combiner 6. Thus, variable amplifier 8 is coupled to antenna element 2.

A signal received by antenna element 3 is input to variable phase shifter 5. Variable phase shifter 5 shifts the phase of the received signal by a predetermined phase shift amount, and outputs the signal with the shifted phase to variable amplifier 9. Variable amplifier 9 amplifies the amplitude of the received signal at a predetermined gain, and outputs the amplified signal to combiner 6. Thus, variable amplifier 9 is coupled to antenna element 3.

Combiner 6 adds up the signals received from variable amplifiers 8 and 9 and inputs a signal provided by adding up the signal to demodulator 51. Demodulator 51 demodulates the input signal and outputs the demodulated signal to display 52, which displays image based on the demodulated signal.

A portion of the signal output from combiner 6 is input to signal processor 7 which determines a signal quality value, such as a bit error rate (BER), a carrier-to-noise ratio, or a signal-noise (S/N) ratio, indicating the quality of the signal. Signal processor 7 then controls the amount of the phases shifted by variable phase shifters 4 and 5 and the gains of variable amplifiers 8 and 9 so as to allow the signal quality value to indicate the best quality.

In diversity antenna system 1, antenna elements 2 and 3 have substantially the same input impedances, allowing diversity antenna system 1 to provide superior reception characteristics.

Fig. 2 is a block diagram of diversity antenna system 10, an equivalent circuit of diversity antenna system 1 shown in Fig. 1. Diversity antenna system 10 includes antenna elements 2 and 3, feeding sections 11 and 12 connected to antenna elements 2 and 3, respectively, and ground plate 13 connected to feeding sections 11 and 12. A shown in Fig. 2, feeding section 11 correspond to variable phase shifter 4 and variable amplifier 8 shown in Fig. 1, and feeding section 12 correspond to variable phase shifter 5 and variable amplifier 9. In Fig. 2, for simplification, combiner 6 and signal processor 7 are not shown. Antenna elements 2 and 3 are placed close to each other.

Two antenna elements placed close to each other are generally coupled electromagnetically to each other, causing the reception characteristics to deteriorate. More specifically, a part of a signal radiated by one antenna element is received by the other antenna element electromagnetically coupled to the one antenna, and is consumed by the load resistance connected to the other antenna element, thereby producing a loss. In order to reduce the loss due to electromagnetic coupling, the antenna elements are arranged orthogonally to each other to reduce the electromagnetic coupling between the antenna elements, similarly to the cross dipole antenna shown in Fig. 26. In this case, currents contributing to the radiation of the antenna elements flow orthogonally to each other, and accordingly, allowing the direction of peaks of the directivities of the two antennas formed by these currents to be orthogonal to each other. The cross dipole antenna thus having the polarizations orthogonal to each other and provides preferable diversity effects. The cross dipole antenna shown in Fig. 26, however, is required to hold the two dipole antennas orthogonally to each other, but it is difficult to hold them.

The loss due to the electromagnetic coupling can also be reduced simply by placing the antenna elements far apart from each other. In this case, the large distance between the antenna elements prevents the currents contributing to the radiation on the antenna elements from affecting each other so as to allow the signals received by the antenna elements to have different phases, thereby providing excellent diversity effect. This, however, increases the size of the diversity antenna system since the two antenna elements need to be placed at a large distance from each other.

In diversity antenna system 1 according to Embodiment 1, even when antenna elements 2 and 3 are close and electromagnetically coupled to each other, as shown in Fig. 2, antenna elements 2 and 3 can receive two signals that are not strongly correlated to each other, thereby providing excellent receiving sensitivity.

In Fig. 2, antenna elements 2 and 3 are connected to feeding ports 14 and 15, respectively, which have an S parameter expressed by Formula 1.

$$S = \begin{pmatrix} S11 & S21 \\ S12 & S22 \end{pmatrix} \ ... \ (1)$$

In Formula 1, the input impedance of antenna element 2 seen from feeding port 14 is S11, and the input impedance of antenna element 3 seen from feeding port 15 is S22. The couplings between antenna elements 2 and 3 are S12 and S21. Since antenna elements 2 and 3 are passive circuits, couplings S21 and S12 satisfy Formula 2.

$$S12 = S21 \neq 0 \ ... \ (2)$$

In diversity antenna system 1, excellent diversity effect can be obtained in spite of antenna elements 2 and 3 being electromagnetically coupled to each other as shown in Formula 2.

In diversity antenna system 1, antenna elements 2 and 3 are fed in the same phase, that is, in an even mode, and also fed in the opposite phases, that is, in an odd mode.

When feeding ports 14 and 15 feed antenna elements 2 and 3 in the even mode, that is, in the same phase, the input impedance is represented as Scc. When feeding ports 14 and 15 feed antenna elements 2 and 3 in the odd mode, that is, in the opposite phases, the input impedance is represented as Sdd. When feeding ports 14 and 15 feed antenna elements 2 and 3 in the even mode, that is, in the same phase, the reflection component from antenna elements 2 and 3 in the odd mode, that is, in the opposite phases is represented by Sdc. When feeding ports 14 and 15 feed antenna elements 2 and 3 in the even mode, that is, in the same phase, the reflection component from antenna elements 2 and 3 in the odd mode, that is, in the opposite phases is represented by Scd. Since antenna elements 2 and 3 are passive circuits, components Sdc and Scd are equal to each other. Input impedances Scc and Sdd and components Scd and Sdc are represented by Formula 3.

$$\begin{pmatrix} Scc & Scd \\ Sdc & Sdd \end{pmatrix}$$
$$= \frac{1}{2} \begin{pmatrix} S11 + S21 + S12 + S22 & S11 + S21 - S12 - S22 \\ S11 - S21 + S12 - S22 & S11 - S21 - S12 + S22 \end{pmatrix} \cdots (3)$$

As described above, since couplings S21 and S12 are equal to each other, Formula 3 provides Formula 4.

$$\begin{pmatrix} Scc & Scd \\ Sdc & Sdd \end{pmatrix}$$
$$= \frac{1}{2} \begin{pmatrix} S11 + 2 \times S21 + S22 & S11 - S22 \\ S11 - S22 & S11 - 2 \times S21 + S22 \end{pmatrix} \cdots (4)$$

Since input impedances S11 and S22 of antenna elements 2 and 3 are substantially equal to each other, Formula 4 provides Formula 5.

$$\begin{pmatrix} Scc & Scd \\ Sdc & Sdd \end{pmatrix} = \begin{pmatrix} S11 + S21 & 0 \\ 0 & S11 - S21 \end{pmatrix} \cdots (5)$$

According to Formula 5, components Sdc and Scd indicating the coupling between the even mode and odd mode can be zero, thus substantially eliminating the electromagnetic coupling between these feeding modes in which antenna elements 2 and 3 are fed. As a result, diversity antenna system 1 can in principle eliminate degradation in reception characteristics due to the electromagnetic coupling. More specifically, the currents fed to antenna elements 2 and 3 and ground plate 13 in the even mode from feeding ports 14 and 15 do not affect the currents fed to antenna elements 2 and 3 and ground plate 13 in the odd mode from feeding ports 14 and 15.

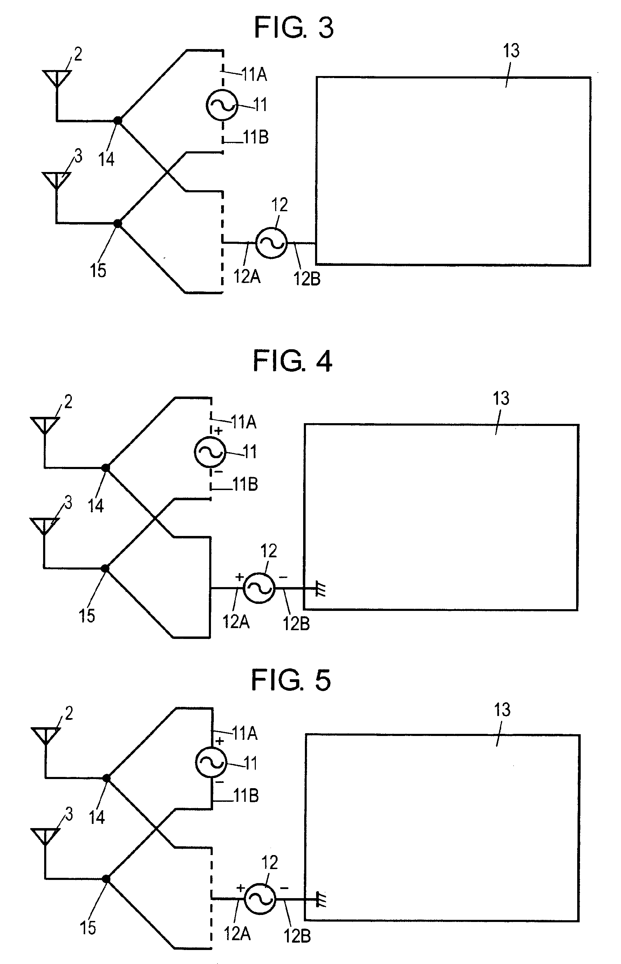

An operation of the system will be described physically below. Fig. 3 is a block diagram of diversity antenna system 1 when antenna elements 2 and 3 are fed in the even mode and the odd mode from feeding ports 14 and 15. In Fig. 3, feeding ports 14 and 15 are fed from feeding section 11 in the odd mode and fed from feeding section 12 in the even mode. More specifically, feeding section 11 has positive terminal 11A connected to feeding port 14, and negative terminal 11B connected to feeding port 15. Feeding section 12 has positive terminal 12A connected to feeding ports 14 and 15, and negative terminal 12B connected to ground plate 13.

Fig. 4 is a block diagram of diversity antenna system 1 when antenna elements 2 and 3 are fed from feeding section 12 in the even mode. Since antenna elements 2 and 3 have the same input impedances seen from feeding ports 14 and 15, respectively, feeding ports 14 and 15 are fed at the substantially same potential. More specifically, in Fig. 4, since positive terminal 11A and negative terminal 11B of feeding section 11 always have the same potential, no signal flow from feeding section 12 to feeding section 11. Thus, feeding sections 11 and 12 are isolated from each other.

Fig. 5 is a block diagram of diversity antenna system 1 when antenna elements 2 and 3 are fed from feeding section 11 in the odd mode. Since antenna elements 2 and 3 have the substantially same input impedances S11 and S22 seen from feeding ports 14 and 15, respectively, feeding ports 14 and 15 are fed at opposite potentials. In Fig. 5, positive terminal 12A of feeding section 12 is always at substantially zero potential due to the combination of signals with phases at feeding ports 14 and 15 opposite to each other. Hence, no signal flows from feeding section 11 to feeding section 12, and thus feeding sections 11 and 12 are isolated from each other.

As described above, feeding ports 14 and 15 are fed in the even mode and in the odd mode and prevent the signals related to the feeding in these modes from affecting each other. The fact that the signals do not to affect each other means that the currents contributing to the radiation are orthogonal to each other. In other words, even when antenna elements 2 and 3 are close and electromagnetically coupled to each other, antenna elements 2 and 3 can generate two orthogonal currents contributing to the radiation. As a result, the directions of the peaks of the directivities of antenna elements 2 and 3 are orthogonal to each other. Antenna elements 2 and 3 have polarizations orthogonal to each other, providing diversity antenna system 1 with excellent diversity effect.

Even if antenna elements 2 and 3 are small monopole antennas having polarizations which are not orthogonal to each other, a radiation pattern formed by combining the radiation patterns of antenna elements 2 and 3 has two polarizations orthogonal to each other using the feeding modes (the even mode and the odd mode). As a result, diversity antenna system 1 can provide excellent reception characteristics using maximum ratio combining or equal gain combining as diversity combining.

Even if antenna elements 2 and 3 are placed close and electromagnetically coupled to each other, feeding sections 11 and 12 allow antenna elements 2 and 3 to receive two signals that are not strongly correlated to each other, thereby providing diversity antenna system 1 with a small size and excellent reception characteristics.

The feeding in the even mode and the odd mode to diversity antenna system 1 will be described below.

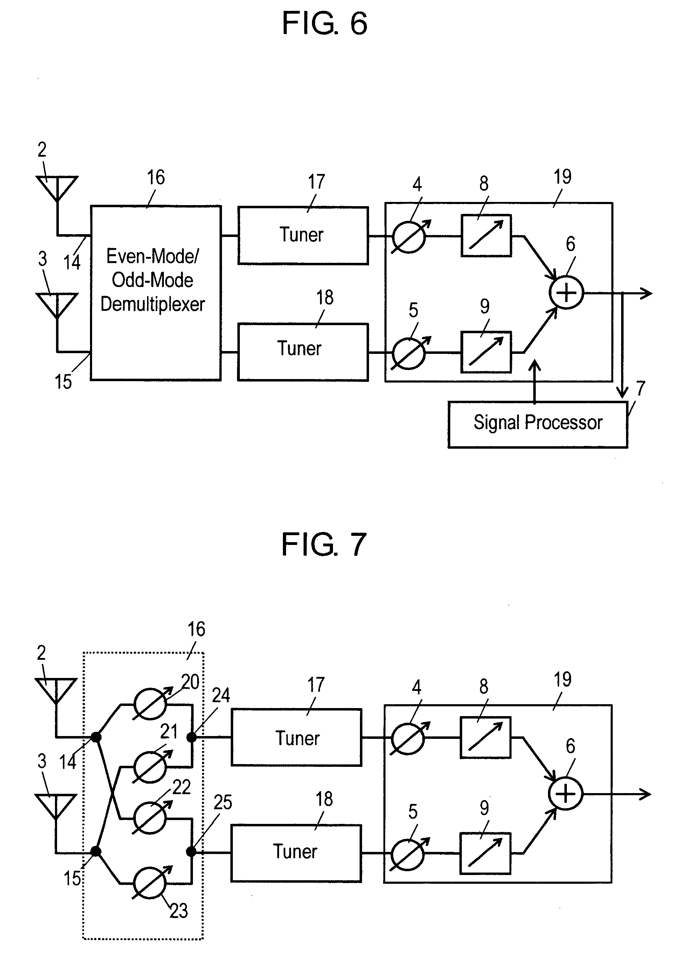

Fig. 6 is a circuit block of diversity antenna system 1 according to Embodiment 1. Antenna elements 2 and 3 are connected to even-mode/odd-mode demultiplexer 16. Demultiplexer 19 includes feeding ports 14 and 15 and feeding sections 11 and 12 shown in Fig. 3. Antenna element 2 and feeding port 14 are electrically connected to each other. Antenna element 3 and feeding port 15 are electrically connected to each other.

A signal received by feeding section 11 is input to tuner 17, and a signal received by feeding section 12 is input to tuner 18 shown in Fig. 6. Tuners 17 and 18 are connected to diversity combining section 19.

Diversity combining section 19 includes variable phase shifters 4 and 5 receiving signals output from tuners 17 and 18, respectively, variable amplifiers 8 and 9 receiving signals output from variable phase shifters 4 and 5, respectively; and combiner 6 adding up the signals output from variable amplifiers 8 and 9. Variable phase shifter 4 shifts the phase of the signal from tuner 17 by a certain phase shift amount, and outputs the signal with the shifted phase. Variable amplifier 8 amplifies the signal from variable phase shifter 4 at a certain gain, and outputs the amplified signal. Variable phase shifter 5 shifts the phase of the signal from tuner 18 by a certain phase shift amount and outputs the signal with the shifted phase. Variable amplifier 9 amplifies the signal from variable phase shifter 5 at a certain gain and outputs the amplified signal. The signal from even-mode/odd-mode demultiplexer 16 shown in Fig. 6 is obtained by modulating a carrier wave by a baseband signal. The signals from tuners 17 and 18 are baseband signals extracted from the output signal of even-mode/odd-mode demultiplexer 16.

The signal from combiner 6 is input to signal processor 7 which determines a signal quality value indicating the quality of the input signal. Signal processor 7 then controls the phase shift amounts of variable phase shifters 4 and 5 and the gains of variable amplifiers 8 and 9 so as to allow the obtained signal quality value to indicate the best quality of the signal.

Diversity combining section 19 and tuners 17 and 18 are connected to antenna elements 2 and 3 via even-mode/odd-mode demultiplexer 16, as shown in Fig. 6, and allows diversity antenna system 1 to be equivalent to the circuit in the feeding in the even mode and the odd mode shown in Fig. 3, thus providing excellent diversity effect.

Fig. 7 is a circuit block diagram of diversity antenna system 1 for illustrating a circuit of even-mode/odd-mode demultiplexer 16.

Even-mode/odd-mode demultiplexer 16 includes feeding port 14 connected to antenna element 2, feeding port 15 connected to antenna element 3, phase shifters 20 and 22 connected to feeding port 14, phase shifters 21 and 23 connected to feeding port 15, node 24 connected to phase shifters 20 and 21, and node 25 connected to phase shifters 22 and 23. Nodes 24 and 25 are connected to tuners 17 and 18, respectively. Phase shifters 20, 21, and 22 have a phase shift amount of 90 degrees, and phase shifter 23 has a phase shift amount of -90 degrees.

In Fig. 7, upon being fed from node 24, feeding ports 14 and 15 are fed in the same phase, that is, in the even mode. Upon being fed from node 25, feeding ports 14 and 15 are fed in the opposite phases, that is, in the odd mode.

Upon being fed from node 24, signals reach feeding ports 14 and 15 receive signals via phase shifters 20 and 21 having a phase shift amount of 90 degrees so as to have a substantially equal potential. Therefore, the signals having the same phase from feeding ports 14 and 15 via phase shifters 22 and 23 having phase shift amounts of 90 degrees and -90 degrees, respectively, are added up at node 25. As a result, node 25 is always at substantially zero potential, and therefore, virtually grounded.

Hence, a signal received through node 24 does not affect the feeding point connected to node 25, and signals in the even mode generated at feeding ports 14 and 15 do not appear at node 25.

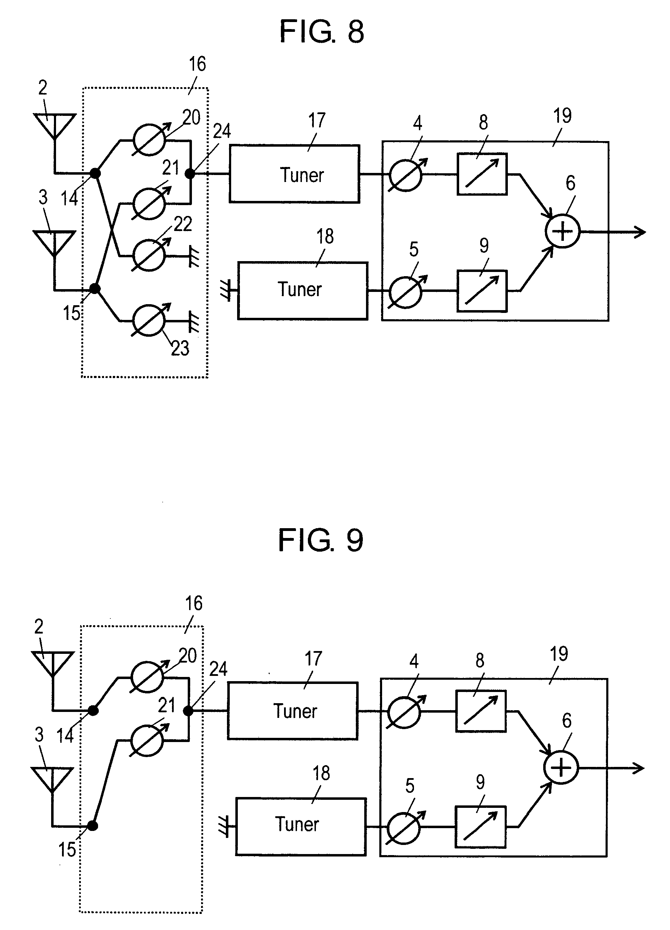

Figs. 8 and 9 are circuit block diagrams of diversity antenna system 1 including node 25 virtually grounded. As shown in Fig. 8, node 25 is virtually grounded and causes feeding ports 14 and 15 to be grounded via phase shifters 22 and 23, respectively. Phase shifters 22 and 23 which are grounded function as short circuited stubs. As shown in Fig. 9, the phase shifter 22 (node 25) is virtually opened as seen from feeding port 14, and the phase shifter 23 (node 25) is virtually opened as seen from feeding port 15. Thus, when signals in the even mode are supplied to feeding ports 14 and 15, no signal is input to node 25.

Upon being fed from node 25, a signal reaches feeding port 14 via phase shifter 22 having a phase shift amount of 90 degrees, and a signal reaches feeding port 15 via phase shifter 23 having a phase shift amount of -90 degrees. Voltages at feeding ports 14 and 15 are opposite to each other in phase, causing the voltage at node 24 to be always substantially zero and be virtually grounded.

Hence, the signal input from node 25 does not affect node 24, and the signals in the odd mode generated at feeding ports 14 and 15 generally do not appear at node 24.

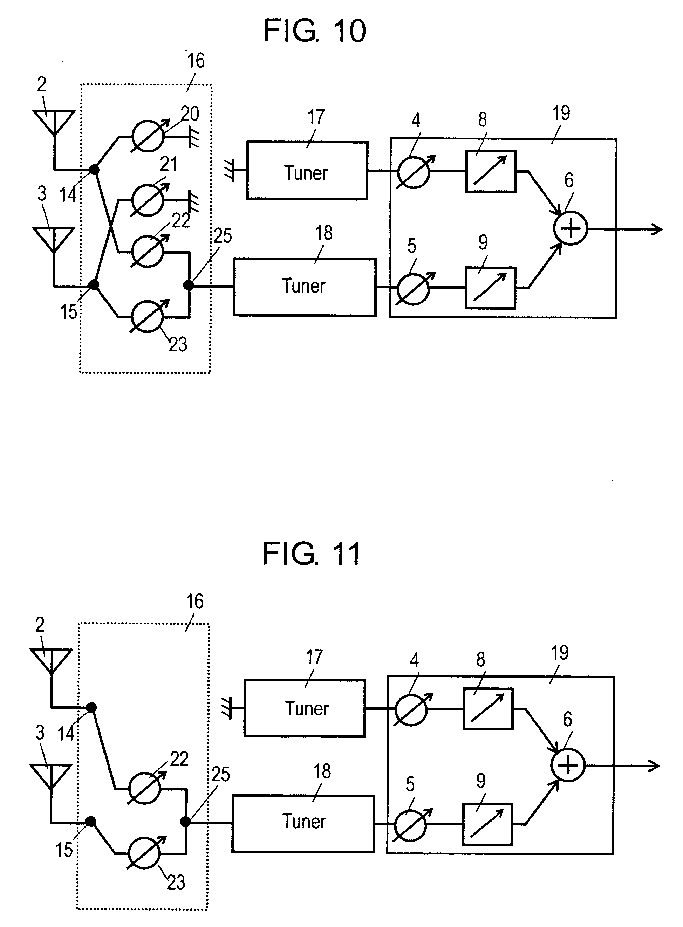

Figs. 10 and 11 are circuit block diagrams of diversity antenna system 1 including node 24 virtually grounded. As shown in Fig. 10, feeding ports 14 and 15 are grounded via phase shifters 20 and 21, respectively. Phase shifters 20 and 21 grounded function as short circuited stubs. As shown in Fig. 11, the phase shifter 20 (node 24) is virtually opened as seen from feeding port 14, and the phase shifter 21 (node 24) is virtually opened as seen from feeding port 15. Thus, when signals with opposite phases in the odd mode are supplied to feeding ports 14 and 15, no signal is input to node 24.

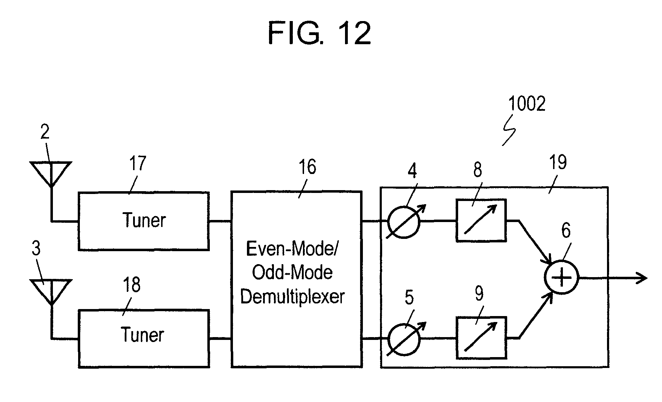

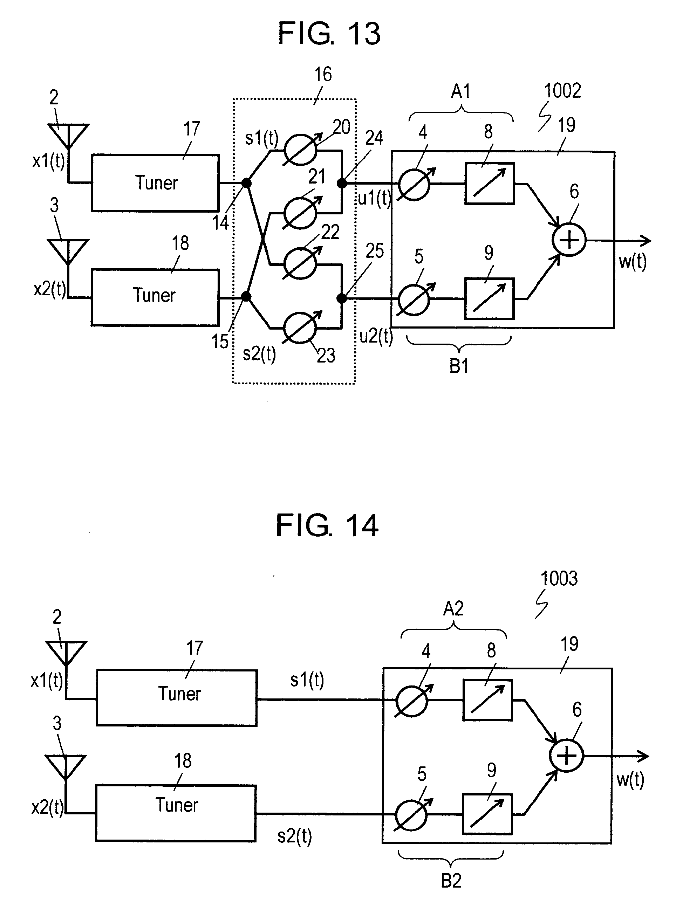

Figs. 12 and 13 are circuit block diagrams of another diversity antenna system 1002 according to Embodiment 1. In Fig. 12, components identical to those of diversity antenna system 1 shown in Figs. 6 to 11 are denoted by the same reference numerals. In diversity antenna system 1002, even-mode/odd-mode demultiplexer 16 is connected between diversity combining section 19 and each of tuners 17 and 18. Diversity antenna system 1002 provides the same effect as diversity antenna system 1 shown in Figs. 6 to 11.

Diversity antenna systems 1 and 1002 shown in Figs. 7 and 13 uses either maximum ratio combining or equal gain combining includes diversity combining section 19 including variable phase shifters 4 and 5 under the control of signal processor 7. Diversity antenna systems 1 and 1002 provide substantially the same effect even if not including even-mode/odd-mode demultiplexer 16. Fig. 14 is a circuit block diagram of still another diversity antenna system 1003 according to Embodiment 1 which does not include even-mode/odd-mode demultiplexer 16.

An operation of diversity antenna system 1003 will be described below.

First, signals in diversity antenna system 1002 shown in Fig. 13 will be described below. Signal x(1) received and output by antenna element 2 and signal x2(t) received and output by antenna element 3 are expressed with baseband signal s1(t) and carrier frequency $f_C$ contained in signal x(1) and baseband signal s2(t) and carrier frequency fc contained in signal x(2) as Formula 6.

$$x1(t) = s1(t)\exp(j2\pi f_C t)$$
$$x2(t) = s2(t)\exp(j2\pi f_C t) \quad \text{... (6)}$$

Tuners 17 and 18 heterodyne carrier frequency fc of signals x1(t) and x2(t) into basebands, and output signals s1(t) and s2(t). Tuner 17 and 18 eliminate the term of exp(j2πf$_C$t) from signals x1(t) and x2(t) shown in Formula 6. As a result, even-mode/odd-mode demultiplexer 16 supplies diversity combining section 19 with signal u1(t) and signal u2(t) shown in Formula 7.

$$u1(t) = \exp\left(j\frac{\pi}{2}\right)s1(t) + \exp\left(j\frac{\pi}{2}\right)s2(t)$$

$$u2(t) = \exp\left(j\frac{\pi}{2}\right)s1(t) + \exp\left(-j\frac{\pi}{2}\right)s2(t) \quad \text{... (7)}$$

Diversity combining section 19 diversity-combines signals u1(t) and u2(t). Weighting coefficient A1 obtained totally by variable phase shifter 4 and variable amplifier 8 and weighting coefficient B1 obtained totally by variable phase shifter 5 and variable amplifier 9 express signal w(t) output from combiner 6 of diversity combining section 19 as Formula 8.

$$w(t) = A1 \times u1(t) + B1 \times u2(t)$$

$$= A1\left\{\exp\left(j\frac{\pi}{2}\right)s1(t) + \exp\left(j\frac{\pi}{2}\right)s2(t)\right\} +$$

$$B1\left\{\exp\left(j\frac{\pi}{2}\right)s1(t) + \exp\left(-j\frac{\pi}{2}\right)s2(t)\right\} \quad ... (8)$$

Next, signals in diversity antenna system 1003 shown in Fig. 14 which dies not include even-mode/odd-mode demultiplexer 16 will be described below.

In Fig. 14, similarly to the system shown in Fig. 13, signal x(1) received and output by antenna element 2 and signal x2(t) received and output by antenna element 3 are expressed with baseband signal s1(t) and carrier frequency fc contained in signal x(1) and baseband signal s2(t) and carrier frequency fc contained in signal x(2) as Formula 6.

$$x1(t) = s1(t)\exp(j2\pi f_C t)$$
$$x2(t) = s2(t)\exp(j2\pi f_C t) \quad ... (6)$$

Tuners 17 and 18 heterodyne the carrier frequencies fc of signals x1(t) and x2(t) into baseband, and output signals s1(t) and s2(t) which are obtained by eliminating the term of exp(j2πf$_C$t) from signals x1(t) and x2(t) shown in Formula 6. Diversity combining section 19 diversity-combines baseband signals s1(t) and s2(t).

Weighting coefficient A2 obtained totally by variable phase shifter 4 and variable amplifier 8 and weighting coefficient B2 obtained totally by variable phase shifter 5 and variable amplifier 9 express signal w(t) output from combiner 6 of diversity combining section 19 as Formula 9.

$$w(t) = A2 \times s1(t) + B2 \times s2(t) \quad ... (9)$$

If weighting coefficients A2 and B2 in diversity combining section 19 are expressed as Formula 10 including weighting coefficients A1 and B1 of diversity antenna system 1002 shown in Fig. 13, diversity antenna system 1003 shown in Fig. 14 operates in the same manner as diversity antenna system 1002 of Fig. 13.

$$A2 = A1\exp\left(j\frac{\pi}{2}\right) + B1\exp\left(-j\frac{\pi}{2}\right)$$

$$B2 = A1\exp\left(j\frac{\pi}{2}\right) + B1\exp\left(j\frac{\pi}{2}\right) \quad ... (10)$$

The aforementioned description refers to a carrier wave having single frequency f$_C$; however, diversity antenna systems 1, 1002, and 1003 operate in the same manner in the case of multicarrier modulation, such as orthogonal frequency division multiplexing (OFDM).

The input impedance of antenna element 2 is represented by S11 contained in Formulas 1 and 3 to 5. More specifically, the input impedance is an impedance of antenna element 2 seen from the feeding point of antenna element 2, from feeding port 14 of even-mode/odd-mode demultiplexer 16, or from the input terminal of variable phase shifter 4 of diversity combining section 19.

Similarly, the input impedance of antenna element 3 is represented by S22 contained in Formulas 1, 3, and 4. More specifically, the input impedance is an impedance of antenna element 3 seen from the feeding point of antenna element 3, from feeding port 15 of even-mode/odd-mode demultiplexer 16, or from the input terminal of variable phase shifter 5 of diversity combining section 19.

An electronic apparatus including diversity antenna system 1 (1002, or 1003) and display 52 shown in Fig. 1 has a small size and excellent reception performance in spite of antenna elements 2 and 3 placed close to each other.

EXEMPLARY EMBODIMENT 2

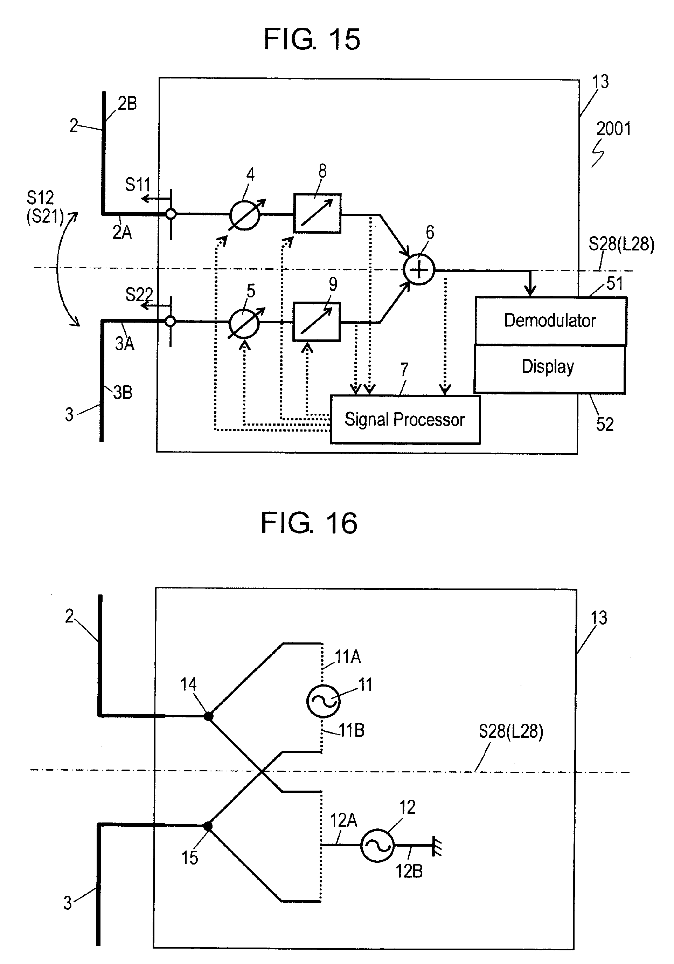

Fig. 15 is a circuit block diagram of diversity antenna system 2001 according to Exemplary Embodiment 2 of the present invention. In Fig. 15, components identical to those of diversity antenna system 1 shown in Fig. 1 according to Embodiment 1 are denoted by the same reference numerals. In Fig. 15, antenna elements 2 and 3 have respective shapes substantially symmetrical to each other with respect to plane S28 or with respect to line L28. Antenna elements 2 and 3 and are close and electromagnetically coupled to each other. Antenna element 2 includes portion 2A extending in parallel with plane S28 or line L28 and portion 2B orthogonal to plane S28 (line L28). Similarly, antenna element 3 includes portion 3A extending in parallel with plane S28 or line L28 and portion 3B orthogonal to plane S28 (line L28). Combiner 6 adds up signals supplied from variable amplifiers 8 and 9, and outputs, to demodulator 51, a signal provided by adding up the signals. Demodulator 51 demodulates the output signal and outputs the demodulated signal to display 52. Display 52 displays an image based on the demodulated signal.

Fig. 16 is a circuit block diagram of diversity antenna system 2001. Similar to diversity antenna system 1 according to Embodiment 1 shown in Fig. 3, antenna elements 2 and 3 are fed in the same phase, that is, in the even mode from feeding section 12, and fed in the opposite phases, that is, in the odd mode from feeding section 11.

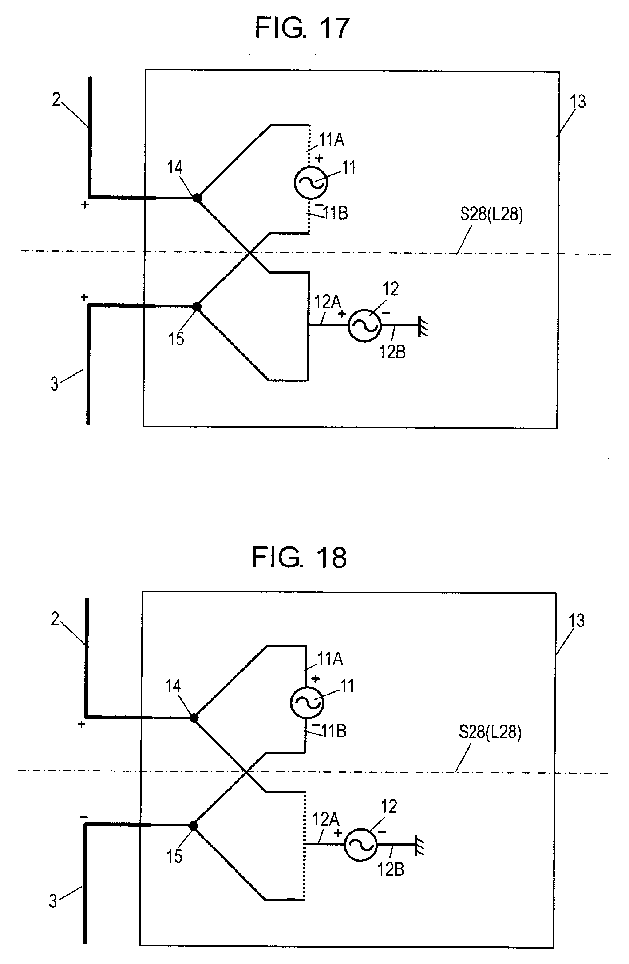

Fig. 17 is a circuit block diagram of diversity antenna system 2001 when antenna elements 2 and 3 are fed in the even mode. Since antenna elements 2 and 3 are symmetrical with respect to plane S28 or line L28, feeding ports 14 and 15 are fed at an identical potential. More specifically, since positive terminal 11A and negative terminal 11B of feeding section 11 always have an identical potential, no signal flows from feeding section 12 to feeding section 11. Thus, feeding sections 11 and 12 are isolated in principle from each other.

Fig. 18 is a circuit block diagram of diversity antenna system 2001 when antenna elements 2 and 3 are fed in the odd mode. Since antenna elements 2 and 3 are symmetrical with respect to plane S28 or line L28, feeding ports 14 and 15 are fed at opposite phase potentials. More specifically, positive terminal 12A of feeding section 12 has a potential equal to the sum of the potentials at feeding ports 14 and 15, that is, is always at substantially zero potential. Hence, no signal flows from feeding section 11 to feeding section 12, allowing feeding sections 11 and 12 to be isolated in principle from each other.

Thus, antenna elements 2 and 3 fed in the even mode and the odd mode prevent feeding sections 11 and 12 from affecting each other.

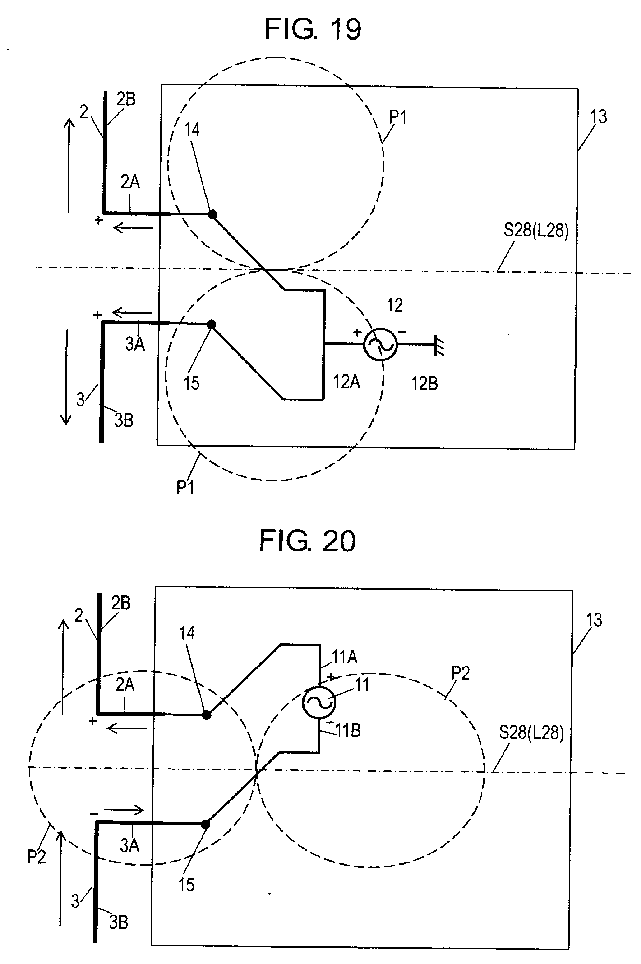

Fig. 19 is a circuit block diagram of diversity antenna system 2001 for illustrating distributions of currents flowing antenna elements 2 and 3 when feeding ports 14 and 15 are fed in the even mode. Portion 2A of antenna element 2 extends in parallel with plane S28 or line L28, and portion 2B is orthogonal to plane S28 (line L28). Similarly, portion 3A of antenna element 3 extends in parallel with plane S28 or line L28, and portion 3B is orthogonal to plane S28 (line L28). When feeding ports 14 and 15 are fed in the same phase, that is, in the even mode, electromagnetic fields generated by the currents flowing to portions 2B and 3B of antenna elements 2 and 3 cancel each other, allowing only the currents flowing to portions 2B and 3B to contribute to the radiation of the electromagnetic fields from antenna elements 2 and 3. As a result, the peaks of the radiation patterns P1 of the electromagnetic fields are directed substantially orthogonally to plane S28 (line L28).

Fig. 20 is a circuit block diagram of diversity antenna system 2001 for illustrating distributions of currents flowing in antenna elements 2 and 3 when feeding ports 14 and 15 are fed in the odd mode. When feeding ports 14 and 15 are fed in the opposite phases, that is, in the odd mode, electromagnetic fields generated by the currents flowing to portions 2A and 3A of antenna elements 2 and 3 cancel each other, allowing only the currents flowing to portions 2B and 3B to contribute to the radiation of the electromagnetic fields. As a result, the peaks of the radiation patterns P2 of the electromagnetic fields are directed substantially in parallel to plane S28 (line L28).

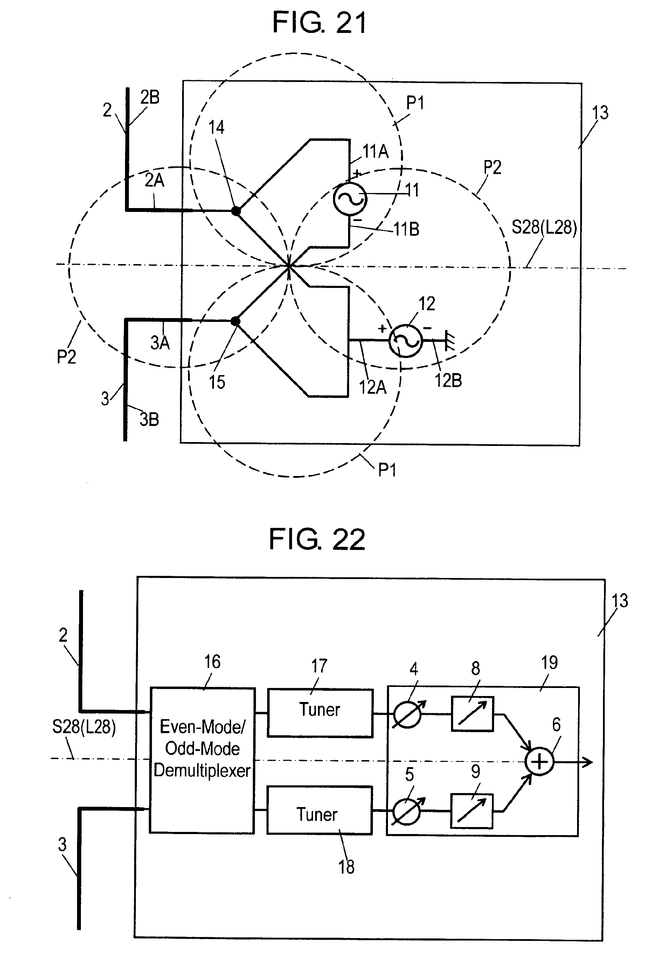

Fig. 21 is a circuit block diagram of diversity antenna system 2001 in which the feeding in the even mode of Fig. 20 and the feeding in the odd mode of Fig. 21 are combined. The peaks of the radiation patterns P1 and P2 are directed orthogonally to each other, and thus, provide diversity antenna system 2001 with two polarizations orthogonal to each other, hence providing diversity antenna systems 2001 with excellent diversity effect.

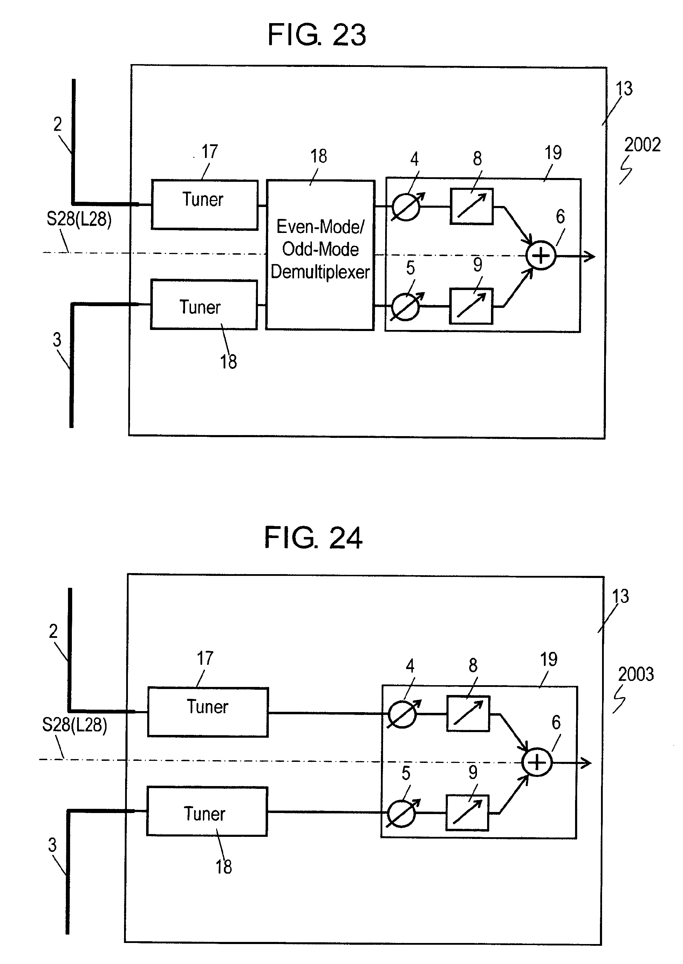

Fig. 22 is a circuit block diagram of diversity antenna system 2001 according to Embodiment 2. Fig. 23 is a circuit block diagram of another diversity antenna system 2002 according to Embodiment 2. Diversity antenna systems 2001 and 2002 according to Embodiment 2 can include even-mode/odd-mode demultiplexer 16 and tuners 17 and 18 similarly to diversity antenna systems 1 and 1002 according to Embodiment 1.

Fig. 24 is a circuit block diagram of still another diversity antenna system 2003 according to Embodiment 2. If diversity antenna system 2003 uses maximum ratio combining or equal gain combining as diversity combining, diversity antenna system 2003 does not include even-mode/odd-mode demultiplexer 16. Weighting coefficients are determined similarly to diversity antenna system 1003 according to Embodiment 1 shown in Fig. 14 provides diversity antenna system 2003 easily.

As long as antenna elements 2 and 3 have respective shapes substantially symmetrical to each other with respect to the certain plane or the line, antenna elements 2 and 3 can have shapes other than the shapes shown in Figs. 15 to 24, providing the same effects. More specifically, antenna elements 2 and 3 fed in the even mode have polarization substantially parallel to plane S28 (line L28). Antenna elements 2 and 3 fed in the odd mode have polarization substantially orthogonal to plane S28 (line L28). As a result, the diversity antenna systems according to the second embodiment can produce two orthogonally polarized waves.

The angle $\theta$ formed between the polarizations of antenna elements 2 and 3 is not 0 degrees. If the angle $\theta$ is 0 degrees, that is, if the polarizations of antenna elements 2 and 3 are parallel to each other, antenna elements 2 and 3 fed even in the even mode or the odd mode cannot have polarizations orthogonal to each other.

Fig. 25 is a circuit block diagram of a comparative example of diversity antenna system 5001. In Fig. 25, components identical to those of diversity antenna system 2001 shown in Fig. 15 are denoted by the same reference numerals. Diversity antenna system 5001 includes antenna elements 202 and 203 instead of antenna elements 2 and 3 of diversity antenna system 2001 shown in Fig. 15. Each of antenna elements 202 and 203 extends in parallel with plane S28 or line L28 and does not include any portion orthogonal to plane S28 (line L28). Respective polarizations of antenna elements 202 and 303 are parallel to plane S28 (line L28). Upon being fed even in the odd mode, antenna elements 202 and 203 can hardly have polarization orthogonal to plane S28 (line L28), and hence, cannot produce two polarization orthogonal to each other.

Antenna elements 2 and 3 are not necessarily geometrically symmetrical to each other with respect to plane S28 (line L28), but can be electrically symmetrical to each other with respect to plane S28 (line L28), providing the same effects.

**Claims**

1.  A diversity antenna system comprising:

    a first antenna element (2);
    a second antenna element (3);
    a first variable phase shifter (4) connected to the first antenna element (2);
    a second variable phase shifter (5) connected to the second antenna element (3);
    a first variable amplifier (8) connected in series to the first phase shifter (4); and a second variable amplifier (9) connected in series to the second phase shifter (5);
    a combiner (6) for adding up a signal output from the first variable amplifier (8) and a signal output from the second variable amplifier (9);
    a signal processor (7) connected to the combiner (6);
    wherein
    the signal processor (7) is adapted for determining a signal quality value indicating a quality of a signal input to the signal processor (7),
    the first antenna element (2) and the second antenna element (3) have input impedances substantially identical to each other, and
    an angle $\theta$ formed between a polarization of the first antenna element (2) and a polarization of the second antenna element (3) is not 0 degree,
    **characterized in that**
    the angle $\theta$ is not 90 degrees so that the first antenna element (2) and the second antenna element (3) are coupled electromagnetically to each other, and
    the signal processor (7) is further adapted for controlling a phase shift amount of the first variable phase shifter (4), a phase shift amount of the second variable phase shifter (5), a gain of the first variable amplifier (8), and a gain of the second variable amplifier (9) based on the signal quality value so as to allow the combiner equivalently to add (a) a first sum of a signal provided by shifting by 90 degrees a phase of a first signal received by the first antenna element (2) and a signal provided by shifting by 90 degrees a phase of a second signal received by the second antenna element (3) and (b) a second sum of a signal provided by shifting by 90 degrees a phase of the first signal and a signal provided by shifting by -90 degrees a phase of the second signal, thereby providing a radiation pattern formed by combining radiation patterns of the first antenna element (2) and the second antenna element (3) which have two polarizations orthogonal to each other.

2. The diversity antenna system according to claim 1, wherein the signal processor (7) is further adapted for controlling the phase shift amount of the first variable phase shifter (4) and the phase shift amount of the second variable phase shifter (5) so as to allow the signal quality value to indicate a best quality to allow the combiner to add the first sum and the second sum, thereby providing the radiation pattern formed by combining the radiation patterns of the first antenna element (2) and the second antenna element (3) which have two polarizations orthogonal to each other.

3. The diversity antenna system according to claim 2, wherein the signal processor (7) is further adapted for controlling the gain of the first variable amplifier (8) and the gain of the second variable amplifier (9) so as to allow the signal quality value to indicate a best quality to allow the combiner to add the first sum and the second sum, thereby providing the radiation pattern formed by combining the radiation patterns of the first antenna element (2) and the second antenna element (3) which have two polarizations orthogonal to each other.

4. An electronic apparatus comprising:

the diversity antenna system according to any one of claims 1 to 3;
a demodulator (51) for demodulating a signal output from the combiner of the diversity antenna system; and
a display (52) for displaying an image based on the demodulated signal.

5. A diversity antenna system comprising:

a first antenna element (2);
a second antenna element (3);
a first variable phase shifter (4) connected to the first antenna element (2);
a second variable phase shifter (5) connected to the second antenna element (3);
a first variable amplifier (8) connected in series to the first phase shifter (4); and a second variable amplifier (9) connected in series to the second phase shifter (5);
a combiner (6) for adding up a signal output from the first variable amplifier (8) and a signal output from the second variable amplifier (9);
a signal processor (7) connected to the combiner;
wherein
the signal processor (7) is adapted for determining a signal quality value indicating a quality of a signal input to the signal processor (7),
the first antenna element (2) and the second antenna element (3) are symmetrical to each other with respect to a certain line and a certain plane, and
an angle $\theta$ formed between a polarization of the first antenna element (2) and a polarization of the second antenna element (3) is not 0 degree,
**characterized in that**
the angle $\theta$ is not 90 degrees so that the first antenna element (2) and the second antenna element (3) are coupled electromagnetically to each other, and
the signal processor (7) is further adapted for controlling a phase shift amount of the first variable phase shifter (4), a phase shift amount of the second variable phase shifter (5), a gain of the first variable amplifier (8), and a gain of the second variable amplifier (9) based on the signal quality value so as to allow the combiner equivalently to add (a) a first sum of a signal provided by shifting by 90 degrees a phase of a first signal received by the first antenna element (2) and a signal provided by shifting by 90 degrees a phase of a second signal received by the second antenna element (3) and (b) a second sum of a signal provided by shifting by 90 degrees a phase of the first signal and a signal provided by shifting by -90 degrees a phase of the second signal, thereby providing a radiation pattern formed by combining radiation patterns of the first antenna element (2) and the second antenna element (3) which have two polarizations orthogonal to each other.

6. The diversity antenna system according to claim 5, wherein the signal processor (7) is further adapted for controlling the phase shift amount of the first variable phase shifter (4) and the phase shift amount of the second variable phase shifter (5) so as to allow the signal quality value to indicate a best quality to allow the combiner to add the first sum and the second sum, thereby providing the radiation pattern formed by combining the radiation patterns of the first antenna element (2) and the second antenna element (3) which have two polarizations orthogonal to each other.

7. The diversity antenna system according to claim 6, wherein the signal processor (7) is further adapted for controlling the gain of the first variable amplifier (8) and the gain of the second variable amplifier (9) so as to allow the signal quality value to indicate a best quality to allow the combiner to add the first sum and the second sum, thereby providing the radiation pattern formed by combining the radiation patterns of the first antenna element (2) and the second antenna element (3) which have two polarizations orthogonal to each other.

8. An electronic apparatus comprising:

the diversity antenna system according to any one of claims 5 to 7;
a demodulator (51) for demodulating a signal output from the combiner; and
a display (52) for displaying an image based on the demodulated signal.

**Patentansprüche**

1. Diversitäres Antennensystem, umfassend:

ein erstes Antennenelement (2);
ein zweites Antennenelement (3);
einen ersten variablen Phasenschieber (4), der mit dem ersten Antennenelement (2) verbunden ist;
einen zweiten variablen Phasenschieber (5), der mit dem zweiten Antennenelement (3) verbunden ist;
einen ersten variablen Verstärker (8), der in Reihe mit dem ersten Phasenschieber (4) geschaltet ist;
einen zweiten variablen Verstärker (9), der in Reihe mit dem zweiten Phasenschieber (5) geschaltet ist;
einen Kombinierer (6) zum Aufaddieren eines von dem ersten variablen Verstärker (8) ausgegeben Signals und eines von dem zweiten variablen Verstärker (9) ausgegeben Signals;
einen Signalprozessor (7), der mit dem Kombinierer (6) verbunden ist;
wobei der Signalprozessor (7) dazu eingerichtet ist, einen Signalqualitätswert zu bestimmen, der eine Qualität eines Signals angibt, das an den Signalprozessor (7) eingegeben wird,
das erste Antennenelement (2) und das zweite Antennenelement (3) im Wesentlichen gleiche Eingangsimpedanzen haben, und
ein zwischen einer Polarisation des ersten Antennenelements (2) und einer Polarisation des zweiten Antennenelements (3) gebildeter Winkel e nicht 0° beträgt,
**dadurch gekennzeichnet, dass**
der Winkel $\theta$ nicht 90 °C beträgt, sodass das erste Antennenelement (2) und das zweite Antennenelement (3) elektromagnetisch miteinander gekoppelt sind, und
der Signalprozessor (7) desweiteren dazu eingerichtet ist, einen Phasenverschiebungsbetrag des ersten variablen Phasenschiebers (4), einen Phasenverschiebungsbetrag des zweiten variablen Phasenschiebers (5), einen Verstärkungsfaktor des ersten variablen Verstärkers (8) und einen Verstärkungsfaktor des zweiten variablen Verstärkers (9) auf Basis des Signalqualitätswerts so zu steuern, dass es dem Kombinierer ermöglicht wird, gleichermaßen (a) eine erste Summe eines Signals, das durch eine 90° Phasenverschiebung eines ersten durch das erste Antennenelement (2) empfangenen Signals erhalten wird, und eines Signals, das durch eine 90° Phasenverschiebung eines zweiten von dem zweiten Antennenelement empfangenen Signals erhalten wird, und (b) eine zweite Summe eines Signals, das durch eine 90° Phasenverschiebung des ersten Signals erhalten wird, und eines Signals, das durch eine -90° Phasenverschiebung des zweiten Signals erhalten wird, aufzuaddieren, wodurch ein Abstrahlungsmuster zur Verfügung gestellt wird, das durch eine Kombination des Abstrahlungsmusters des ersten Antennenelements (2) und des zweiten Antennenelements (3) gebildet wird, welche zwei zueinander orthogonale Polarisierungen haben.

2. Diversitäres Antennensystem nach Anspruch 1, wobei der Signalprozessor (7) desweiteren dazu eingerichtet ist, den Phasenverschiebungsbetrag des ersten variablen Phasenschiebers (4) und den Phasenverschiebungsbetrag des zweiten variablen Phasenschiebers (5) so zu steuern, dass es ermöglicht wird, dass der Signalqualitätswert eine beste Qualität angibt, um es dem Kombinierer zu ermöglichen, die erste Summe und die zweite Summe zu addieren, wodurch das Abstrahlungsmuster zur Verfügung gestellt wird, das durch Kombination der Abstrahlungsmuster des ersten Antennenelements (2) und des zweiten Antennenelements (3) gebildet wird, welche zwei zueinander orthogonale Polarisierungen haben.

3. Diversitäres Antennensystem nach Anspruch 2, wobei der Signalprozessor (7) desweiteren dazu eingerichtet ist, den Verstärkungsfaktor des ersten variablen Verstärkers (8) und den Verstärkungsfaktor des zweiten variablen Verstärkers (9) so zu steuern, dass es ermöglicht wird, das der Signalqualitätswert eine beste Qualität angibt, um es dem Kombinierer zu ermöglichen, die erste Summe und die zweite Summe zu addieren, wodurch das Abstrahlungsmuster zur Verfügung gestellt wird, das durch Kombination der Abstrahlungsmuster des ersten Antennenelements (2) und des zweiten Antennenelements (3) gebildet wird, welche zwei zueinander orthogonale Polarisierungen haben.

4.  Elektronische Vorrichtung, umfassend:

    das diversitäre Antennensystem gemäß einem der Ansprüche 1-3;
    einen Demodulator (51) zur Demodulierung eines Signals, das von dem Kombinierer des diversitären Antennensystems ausgegeben wird;
    eine Anzeige (52) zur Anzeige eines Bildes auf Basis des demodulierten Signals.

5.  Diversitäres Antennensystem, umfassend:

    ein erstes Antennenelement (2);
    ein zweites Antennenelement (3);
    einen ersten variablen Phasenschieber (4), der mit dem ersten Antennenelement (2) verbunden ist;
    einen zweiten variablen Phasenschieber (5), der mit dem zweiten Antennenelement (3) verbunden ist;
    einen ersten variablen Verstärker (8), der in Reihe mit dem ersten Phasenschieber (4) geschaltet ist; und
    einen zweiten variablen Verstärker (9), der in Reihe mit dem zweiten Phasenschieber (5) geschaltet ist;
    einen Kombinierer (6) zum Aufaddieren eines von dem ersten variablen Verstärker (8) ausgegebenen Signals und eines von dem zweiten variablen Verstärker (9) ausgegebenen Signals;
    einen Signalprozessor (7), der mit dem Kombinierer verbunden ist;
    wobei der Signalprozessor (7) dazu eingerichtet ist, einen Signalqualitätswert zu bestimmen, der eine Qualität eines Signals angibt, das an den Signalprozessor (7) eingegeben wird,
    das erste Antennenelement (2) und das zweite Antennenelement (3) symmetrisch zu einander bezüglich einer bestimmten Linie und einer bestimmten Ebene sind, und
    ein zwischen einer Polarisierung des ersten Antennenelements (2) und einer Polarisierung des zweiten Antennenelements (3) gebildeter Winkel θ nicht 0° beträgt,
    **dadurch gekennzeichnet, dass**:

        der Winkel θ nicht 90° beträgt, sodass das erste Antennenelement (2) und das zweite Antennenelement (3) elektromagnetisch miteinander gekoppelt sind, und
        der Signalprozessor (7) desweiteren dazu eingerichtet ist, einen Phasenverschiebungsbetrag des ersten variablen Phasenschiebers (4), einen Phasenverschiebungsbetrag des zweiten variablen Phasenschiebers (5), einen Verstärkungsfaktor des ersten variablen Verstärkers (8) und einen Verstärkungsfaktor des zweiten variablen Verstärkers (9) auf Basis des Signalqualitätswerts so zu steuern, dass es dem Kombinierer ermöglicht wird, gleichermaßen (a) eine erste Summe eines Signals, das durch eine 90° Phasenverschiebung eines ersten von dem ersten Antennenelement (2) empfangenen Signals erhalten wird, und eines Signals, das durch eine 90° Phasenverschiebung eines von dem zweiten Antennenelement (3) empfangenen Signals erhalten wird, und (b) eine zweite Summe eines Signals, das durch eine 90° Phasenverschiebung des ersten Signals erhalten wird, und eines Signals, das durch eine -90° Phasenverschiebung des zweiten Signals erhalten wird, auf zu addieren, wodurch ein Abstrahlungsmuster zur Verfügung gestellt wird, das durch Kombination der Abstrahlungsmuster des ersten Antennenelements (2) und des zweiten Antennenelements (3) gebildet wird, welche zwei zueinander orthogonale Polarisierungen haben.

6.  Diversitäres Antennensystem nach Anspruch 5, wobei der Signalprozessor (7) desweiteren dazu eingerichtet ist, den Phasenverschiebungsbetrag des ersten variablen Phasenschiebers (4) und den Phasenverschiebungsbetrag des zweiten variablen Phasenschiebers (5) so zu steuern, dass es ermöglicht wird, dass der Signalqualitätswert eine beste Qualität angibt, um es dem Kombinierer zu ermöglichen, die erste Summe und die zweite Summe zu addieren, wodurch das Abstrahlungsmuster zur Verfügung gestellt wird, das durch Kombination der Abstrahlungsmuster des ersten Antennenelements (2) und des zweiten Antennenelements (3) gebildet wird, welche zueinander orthogonale Polarisierungen haben.

7.  Diversitäres Antennensystem nach Anspruch 6, wobei der Signalprozessor (7) desweiteren dazu eingerichtet ist, den Verstärkungsfaktor des ersten variablen Verstärkers (8) und den Verstärkungsfaktor des zweiten variablen Verstärkers (9) so zu steuern, dass es ermöglicht wird, dass der Signalqualitätswert eine beste Qualität angibt, um es dem Kombinierer zu ermöglichen, die erste Summe und die zweite Summe zu addieren, wodurch das Abstrahlungsmuster zur Verfügung gestellt wird, das durch Kombination der Abstrahlungsmuster des ersten Antennenelements (2) und des zweiten Antennenelements (3) gebildet wird, welche zwei zueinander orthogonale Polarisierungen haben.

**8.** Elektronische Vorrichtung, umfassend:

das diversitäre Antennensystem gemäß einem der Ansprüche 5-7;
einen Demodulator (51) zur Demodulierung eines von dem Kombinierer ausgegebenen Signals; und
eine Anzeige (52) zur Anzeige eines Bildes auf Basis des demodulierten Signals.

## Revendications

**1.** Système de plusieurs antennes, comprenant :

- un premier élément d'antenne (2) ;
- un deuxième élément d'antenne (3) ;
- un premier déphaseur variable (4) connecté au premier élément d'antenne (2) ;
- un deuxième déphaseur variable (5) connecté au deuxième élément d'antenne (3) ;
- un premier amplificateur variable (8) connecté en série au premier déphaseur (4) ; et
- un second amplificateur variable (9) connecté en série au deuxième déphaseur (5) ;
- un additionneur (6) pour additionner une sortie de signal du premier amplificateur variable (8) et une sortie de signal du second amplificateur variable (9) ;
- un processeur de signal (7) connecté à l'additionneur (6) ;
- le processeur de signal (7) étant adapté à déterminer une valeur de qualité de signal indiquant une qualité d'une entrée de signal du processeur de signal (7),
- le premier élément d'antenne (2) et le deuxième élément d'antenne (3) ayant des impédances d'entrée sensiblement identiques l'une à l'autre, et
- l'angle θ formé entre une polarisation du premier élément d'antenne (2) et une polarisation du deuxième élément d'antenne (3) n'étant pas de 0 degrés,
- **caractérisé en ce que** :

- l'angle θ n'est pas de 90 degrés de sorte que le premier élément d'antenne (2) et le deuxième élément d'antenne (3) sont couplés électromagnétiquement l'un à l'autre, et
- le processeur de signal (7) est en outre adapté à commander une quantité de déphasage du premier déphaseur variable (4), une quantité de déphasage du deuxième déphaseur variable (5), un gain du premier amplificateur variable (8) et un gain du deuxième amplificateur variable (9) en fonction de la valeur de qualité de signal, de façon à permettre à l'additionneur de façon équivalente d'additionner : (a) une première somme d'un signal produit en déphasant de 90 degrés la phase d'un premier signal reçu par le premier élément d'antenne (2) et d'un signal produit en déphasant de 90 degrés la phase d'un deuxième signal reçu par le deuxième élément d'antenne (3), et (b) une deuxième somme d'un signal produit en déphasant de 90 degrés la phase du premier signal et d'un signal produit en déphasant de - 90 degrés la phase du deuxième signal, en fournissant ainsi un motif de rayonnement formé en combinant les motifs de rayonnement du premier élément d'antenne (2) et du deuxième élément d'antenne (3) qui ont deux polarisations orthogonales l'une à l'autre.

**2.** Système de plusieurs antennes selon la revendication 1, dans lequel le processeur de signal (7) est en outre adapté à commander la quantité de déphasage du premier déphaseur variable (4) et la quantité de déphasage du deuxième déphaseur variable (5), de façon à permettre à la valeur de qualité de signal d'indiquer une meilleure qualité pour permettre à l'additionneur d'additionner la première somme et la deuxième somme, en fournissant ainsi le motif de rayonnement formé en combinant les motifs de rayonnement du premier élément d'antenne (2) et du deuxième élément d'antenne (3) qui ont deux polarisations orthogonales l'une à l'autre.

**3.** Système de plusieurs antennes selon la revendication 2, dans lequel le processeur de signal (7) est en outre adapté à commander le gain du premier amplificateur variable (8) et le gain du deuxième amplificateur variable (9), de façon à permettre à la valeur de qualité de signal d'indiquer une meilleure qualité pour permettre à l'additionneur d'additionner la première somme et la deuxième somme, en fournissant ainsi le motif de rayonnement formé en combinant les motifs de rayonnement du premier élément d'antenne (2) et du deuxième élément d'antenne (3) qui ont deux polarisations orthogonales l'une à l'autre.

4. Appareil électronique comprenant :

- le système de plusieurs antennes selon l'une quelconque des revendications 1 à 3 ;
- un démodulateur (51) pour démoduler une sortie de signal de l'additionneur du système de plusieurs antennes ; et
- un afficheur (52) pour afficher une image fondée sur le signal démodulé.

5. Système de plusieurs antennes, comprenant :

- un premier élément d'antenne (2) ;
- un deuxième élément d'antenne (3) ;
- un premier déphaseur variable (4) connecté au premier élément d'antenne (2) ;
- un deuxième déphaseur variable (5) connecté au deuxième élément d'antenne (3) ;
- un premier amplificateur variable (8) connecté en série au premier déphaseur (4) ; et
- un second amplificateur variable (9) connecté en série au deuxième déphaseur (5) ;
- un additionneur (6) pour additionner une sortie de signal du premier amplificateur variable (8) et une sortie de signal du second amplificateur variable (9) ;
- un processeur de signal (7) connecté à l'additionneur (6) ;
- le processeur de signal (7) étant adapté à déterminer une valeur de qualité de signal indiquant une qualité d'une entrée de signal du processeur de signal (7),
- le premier élément d'antenne (2) et le deuxième élément d'antenne (3) étant symétriques l'un à l'autre par rapport à une certaine ligne et un certain plan, et
- l'angle $\theta$ formé entre une polarisation du premier élément d'antenne (2) et une polarisation du deuxième élément d'antenne (3) n'étant pas de 0 degrés,
- **caractérisé en ce que** :

  - l'angle $\theta$ n'est pas de 90 degrés de sorte que le premier élément d'antenne (2) et le deuxième élément d'antenne (3) sont couplés électromagnétiquement l'un à l'autre, et
  - le processeur de signal (7) est en outre adapté à commander une quantité de déphasage du premier déphaseur variable (4), une quantité de déphasage du deuxième déphaseur variable (5), un gain du premier amplificateur variable (8) et un gain du deuxième amplificateur variable (9) en fonction de la valeur de qualité de signal, de façon à permettre à l'additionneur de façon équivalente d'additionner : (a) une première somme d'un signal produit en déphasant de 90 degrés la phase d'un premier signal reçu par le premier élément d'antenne (2) et d'un signal produit en déphasant de 90 degrés la phase d'un deuxième signal reçu par le deuxième élément d'antenne (3), et (b) une deuxième somme d'un signal produit en déphasant de 90 degrés la phase du premier signal et d'un signal produit en déphasant de - 90 degrés la phase du deuxième signal, en fournissant ainsi un motif de rayonnement formé en combinant les motifs de rayonnement du premier élément d'antenne (2) et du deuxième élément d'antenne (3) qui ont deux polarisations orthogonales l'une à l'autre.

6. Système de plusieurs antennes selon la revendication 5, dans lequel le processeur de signal (7) est en outre adapté à commander la quantité de déphasage du premier déphaseur variable (4) et la quantité de déphasage du deuxième déphaseur variable (5), de façon à permettre à la valeur de qualité de signal d'indiquer une meilleure qualité pour permettre à l'additionneur d'additionner la première somme et la deuxième somme, en fournissant ainsi le motif de rayonnement formé en combinant les motifs de rayonnement du premier élément d'antenne (2) et du deuxième élément d'antenne (3) qui ont deux polarisations orthogonales l'une à l'autre.

7. Système de plusieurs antennes selon la revendication 6, dans lequel le processeur de signal (7) est en outre adapté à commander le gain du premier amplificateur variable (8) et le gain du deuxième amplificateur variable (9), de façon à permettre à la valeur de qualité de signal d'indiquer une meilleure qualité pour permettre à l'additionneur d'additionner la première somme et la deuxième somme, en fournissant ainsi le motif de rayonnement formé en combinant les motifs de rayonnement du premier élément d'antenne (2) et du deuxième élément d'antenne (3) qui ont deux polarisations orthogonales l'une à l'autre.

8. Appareil électronique comprenant :

- le système de plusieurs antennes selon l'une quelconque des revendications 5 à 7 ;
- un démodulateur (51) pour démoduler une sortie de signal de l'additionneur ; et
- un afficheur (52) pour afficher une image fondée sur le signal démodulé.

# FIG. 1

# FIG. 2

## FIG. 3

## FIG. 4

## FIG. 5

EP 2 178 170 B1

# FIG. 6

# FIG. 7

# FIG. 8

# FIG. 9

# FIG. 10

# FIG. 11

# FIG. 12

# FIG. 13

# FIG. 14

# FIG. 15

# FIG. 16

# FIG. 17

# FIG. 18

# FIG. 19

# FIG. 20

# FIG. 21

# FIG. 22

# FIG. 23

# FIG. 24

# FIG. 25

# FIG. 26

# FIG. 27

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007166188 A
- EP 1480367 A2
- GB 2401994 A